# EUROPEAN PATENT SPECIFICATION

(11) **EP 2 774 952 B1**
(45) Date of publication and mention of the grant of the patent: **19.06.2019**
(21) Application number: 12845903.9
(22) Date of filing: 26.10.2012
(51) Int. Cl.: C08K 3/01, C09K 19/38, H01B 1/20

(54) **WHOLLY AROMATIC LIQUID CRYSTAL POLYESTER RESIN COMPOUND AND PRODUCT HAVING ANTISTATIC PROPERTIES**
VOLLAROMATISCHE FLÜSSIGKRISTALL-POLYESTERHARZVERBINDUNG UND PRODUKT MIT ANTISTATISCHEN EIGENSCHAFTEN
COMPOSÉ DE RÉSINE DE POLYESTER ENTIÈREMENT AROMATIQUE À CRISTAUX LIQUIDES ET PRODUIT DOTÉ DE PROPRIÉTÉS ANTISTATIQUES

(30) Priority: 31.10.2011 KR 20110112504
(43) Date of publication of application: 10.09.2014
(73) Proprietor: Shenzhen Wote Advanced Materials Co., Ltd., Nanshan District, Shenzhen (CN)
(72) Inventor: LEE, Myung Se, Daejeon 305-729 (KR); SHIN, Young Hak, Seongnam-si Gyeonggi-do 461-804 (KR); SHIN, Myung Geun, Suwon-si Gyeonggi-do 443-821 (KR); YUN, Jong Hwa, Daejeon 302-737 (KR); KIM, Mahn Jong, Daejeon 305-761 (KR)
(74) Representative: Stepney, Gregory John
(86) International application number: PCT/KR2012/008845
(87) International publication number: WO 2013/066003

(56) References cited:
- EP-A2- 2 418 249
- WO-A1-2004/012210
- KR-A- 20100 111 094
- KR-A- 20100 139 105
- KR-B1- 100 827 265
- KR-B1- 100 829 513
- US-A- 5 110 896
- US-A1- 2008 265 202
- US-A1- 2011 073 807
- US-A1- 2011 089 371

## Description

### Technical Field

The present invention relates to a wholly aromatic liquid crystalline polyester resin compound and an article including the same. In particular, the present invention relates to a wholly aromatic liquid crystalline polyester resin compound that has an anti-static property due to the inclusion of an electrically conductive filler, and an article including the wholly aromatic liquid crystalline polyester resin compound.

### Background Art

Wholly aromatic liquid crystalline polyester resins have excellent heat resistance and excellent dimensional stability, and excellent fluidity during melting, and due to such features, they are widely used as a fine injection molding material in manufacturing electronic parts. In particular, the use of wholly aromatic liquid crystalline polyester resins extend to a material for a connector and a bobbin of electronic products due to their excellent dimensional stability and electric insulating properties.

Wholly aromatic liquid crystalline polyester resins are a thermoplastic polymer prepared by condensation polymerization of one or more monomers, and the wholly aromatic liquid crystalline polyester resins are kneaded with an inorganic filler, such as glass fiber or talc, and then, subjected to extrusion, thereby completing the preparation of a resin compound. In addition, the resin compound may be processed into a product using an injection process.

Also, a connector and a bobbin of electronic products, which are usually formed of the resin compound, are typically formed using injection. However, foreign materials, dust, or resin powder, which may occur during the injection process, may be attached to products, causing appearance defects thereof, which leads to weak mechanical and/or electrical insulating strength of the products.

When products have such appearance defects, injection companies may experience temporal and economical damage due to low productivity and process instability. Accordingly, to prevent such appearance defects, foreign material removal equipments, such as a clean room, are required. However, such equipments may contribute to higher manufacturing costs, leading to low price competitiveness of products.

US-2011/089371 relates to a resin composition for surface-mountable (SMT) camera modules which is excellent in the balance between heat resistance, rigidity, strength or moldability and surface exfoliation characteristics. EP 2 418 249 relates to a wholly aromatic liquid crystalline polyester resin compound and a method of preparing the same. WO-2004/012210 relates to static dissipative compositions containing thermoplastic polymers that are useful for housings and other parts for shielding electronic equipment and components.

### Disclosure of the Invention

### Technical Problem

An embodiment of the present invention provides a wholly aromatic liquid crystalline polyester resin compound that has an anti-static property due to the inclusion of an electrically conductive filler.

Another embodiment of the present invention provides an article including the wholly aromatic liquid crystalline polyester resin compound.

### Technical Solution

According to an aspect of the present invention, there is provided a wholly aromatic liquid crystalline polyester resin compound comprising:
a wholly aromatic liquid crystalline polyester resin having a melting point of 300 to 450 °C; and
an electrically conductive filler,
wherein the electrically conductive filler comprises at least one selected from the group consisting of carbon black, carbon fiber, metal powder, metal-coated inorganic powder, and carbon nanotubes,
wherein an amount of the electrically conductive filler is in a range of about 5 to about 30 parts by weight based on 100 parts by weight of the wholly aromatic liquid crystalline polyester resin,
wherein the wholly aromatic liquid crystalline polyester resin compound has a surface resistance of 10⁷ to 4x10¹¹Ω/sq.

The electrically conductive filler may have a particle size of about 10 to about 100 nm.

The wholly aromatic liquid crystalline polyester resin compound may further include an electrically non-conductive filler.

The electrically non-conductive filler may include at least one selected from the group consisting of glass fiber, talc, calcium carbonate, and clay.

An amount of the electrically non-conductive filler may be in a range of about 5 to about 90 parts by weight based on 100 parts by weight of the wholly aromatic liquid crystalline polyester resin.

According to an aspect of the present invention, there is provided an article including the wholly aromatic liquid crystalline polyester resin compound.

The article may be an injection-molded product of the wholly aromatic liquid crystalline polyester resin compound.

### Advantageous Effects

When a wholly aromatic liquid crystalline polyester resin compound according to an embodiment of the present invention is used to manufacture a connector or a bobbin of electronic products, appearance defects that may occur when foreign materials, dust, or resin powder, which may be generated or introduced during the injection process, are attached to a product, and the resulting decrease in low mechanical and/or electrical insulating strength of the products may be prevented. In addition, when the wholly aromatic liquid crystalline polyester resin compound is used in manufacturing an electronic product causing electromagnetic waves, the effects of shielding electromagnetic waves may be obtained.

### Mode for Invention

Hereinafter, a wholly aromatic liquid crystalline polyester resin compound according to an embodiment of the present invention is described in detail.

The wholly aromatic liquid crystalline polyester resin compound according to an embodiment of the present invention includes a wholly aromatic liquid crystalline polyester resin and an electrically conductive filler.

When the wholly aromatic liquid crystalline polyester resin compound, including the electrically conductive filler, is used to manufacture a product (that is, an injection molded product) by using an injection process, even when foreign materials, dust, and/or resin powder are generated or introduced during the injection process, they are not attached to the product, and thus, the appearance defects of the product does not occur. Accordingly, the product may have high mechanical strength, and due to the electrical insulation property of the wholly aromatic liquid crystalline polyester resin, a high electrical insulating property (that is, current leakage suppression force) thereof may be maintained. In addition, since the product has the electrically conductive filler, the effects of shielding electromagnetic waves may be obtained.

The wholly aromatic liquid crystalline polyester resin has a melting temperature of 300 to 450°C. Since the melting temperature of the wholly aromatic liquid crystalline polyester resin is within the temperature range above, a wholly aromatic liquid crystalline polyester resin compound having a high heat resistance and excellent injection processability is obtained.

The wholly aromatic liquid crystalline polyester resin has a high melting temperature, and thus, has a high heat resistant property. The wholly aromatic liquid crystalline polyester resin may be prepared as described below:
1. (a) condensation-polymerizing one or more monomers to synthesize a wholly aromatic liquid crystalline polyester prepolymer; and
2. (b) solid phase condensation polymerizing the prepolymer to synthesize wholly aromatic liquid crystalline polyester resin.

The monomers used in step (a) may include aromatic diol, aromatic diamine, aromatic hydroxylamine, aromatic dicarboxylic acid, aromatic hydroxy carboxylic acid, aromatic amino carboxylic acid, or a combination thereof.

The condensation-polymerizing in step (a) may be solution condensation polymerization, or bulk condensation polymerization. In addition, to expedite the condensation-polymerization in step (a), an acylated (in particular, acetylated) monomer may be used as a monomer of step (a). To do this, prior to step (a), the monomers may be additionally acylated.

To perform the solid phase condensation polymerization in step (b), an appropriate intensity of heat may be provided to the prepolymer, and as a heat supply method, a method using a heating plate, a method using hot air, a method using high-temperature fluid, or the like may be used. By-products that are formed during the solid phase condensation polymerization may be removed by purging using an inert gas or vacuum.

The electrically conductive filler may provide an anti-static property to the wholly aromatic liquid crystalline polyester resin compound and an injection-molded product thereof.

The electrically conductive filler may have a particle size of about 10 to about 100 nm. When the particle size of the electrically conductive filler is within this range, the wholly aromatic liquid crystalline polyester resin compound having a high dispersibility of the electrically conductive filler and an injection-molded product with high mechanical properties may be obtained.

The electrically conductive filler includes at least one selected from the group consisting of carbon black, carbon fiber, metal powder, metal-coated inorganic powder, and carbon nanotubes.

The amount of the electrically conductive filler is in a range of about 5 to about 30 parts by weight based on 100 parts by weight of the wholly aromatic liquid crystalline polyester resin. Since the amount of the electrically conductive filler is within this range, a formed injection-molded product having a high anti-static property, an excellent electrical insulating property, and an excellent mechanical property is obtained.

The wholly aromatic liquid crystalline polyester resin compound may additionally include an electrically non-conductive filler.

The electrically non-conductive filler may provide a mechanical property and a heat resistant property to an injection-molded product.

The electrically non-conductive filler may include at least one selected from the group consisting of glass fiber, talc, calcium carbonate, and clay.

An amount of the electrically non-conductive filler may be in a range of about 5 to about 90 parts by weight based on 100 parts by weight of the wholly aromatic liquid crystalline polyester resin. When the amount of the electrically non-conductive filler is within the range, a wholly aromatic liquid crystalline polyester resin compound with high fluidity and an injection-molded product with an excellent mechanical property and an excellent heat resistant property may be obtained.

The wholly aromatic liquid crystalline polyester resin compound may additionally include a stabilizer. The stabilizer may include at least one selected from the group consisting of calcium montanate(Ca-MON), calcium behenate(Ca-BEH) and calcium stearate(Ca-ST).

The wholly aromatic liquid crystalline polyester resin compound according to an embodiment of the present invention has a surface resistance of 10⁷ to 4x10¹¹ Ω/sq. As used herein, the term 'surface resistance of the wholly aromatic liquid crystalline polyester resin compound' means a value measured according to ASTM D257.

The wholly aromatic liquid crystalline polyester resin compound may be prepared by mixing the wholly aromatic liquid crystalline polyester resin, the electrically conductive filler, and optionally, the electrically non-conductive filler to prepare a resin compound, followed by drying and melt-kneading the resin compound.

The melt-kneading may be performed using a twin-screw extruder, a batch-type kneader, a mixing roll, or the like. In particular, when the melt-kneading is performed by using a twin-screw extruder, a barrel temperature of the extruder may be maintained at a temperature of about 330 to about 450°C. As used herein, the term 'barrel of the extruder' means a part for melting, kneading, and transporting a raw material (that is, the resin compound) used for extrusions, and may also be referred to as a cylinder. A screw is placed inside the barrel, and thus, according to the rotation of the screw, the raw material moves forward, and at the same time, the raw material is melted due to heat conducted from a wall of the barrel. In addition, a lubricant may be used during the melt-kneading to smoothly perform melt-kneading.

Also, the stabilizer may be added to the resin compound so as to improve an injection molding stability and a measurement property of the wholly aromatic liquid crystalline polyester resin compound after the melting-kneading.

Following the melt-kneading or the adding of the stabilizer, the resin compound is sufficiently mixed to allow such additives as the electrically conductive filler, the electrically non-conductive filler, and the stabilizer to be homogeneously fused on the surface of the wholly aromatic liquid crystalline polyester resin compound, and then, the mixture is dried at a temperature equal to or higher than melting points of the additives for two or more hours.

In addition, an embodiment of the present invention provides an article including the wholly aromatic liquid crystalline polyester resin compound, and an example of the article is a connector or a bobbin product of electronic products.

The article may be an injection-molded product of the wholly aromatic liquid crystalline polyester resin compound.

One or more embodiments of the present invention will now be described in more detail with reference to the following examples. However, these examples are not intended to limit the scope of the one or more embodiments of the present invention.

### Example

### Examples/Reference Examples 1 to 8 and Comparative Example 1

### (1) Preparation of wholly aromatic liquid crystalline polyester resin (LCP)

24.4 kg of para hydroxy benzoic acid, 10.8 kg of 4,4'-biphenol, 7.3 kg of terephthalic acid, and 2.4 kg of isophthalic acid were added to a 100 L batch-type reactor, the temperature of which is controllable, and then, a nitrogen gas was injected thereinto to make an inner space of the reactor be in an inert state. Then, 33 kg of an acetic anhydride was added to the reactor. Thereafter, the temperature of the reactor was increased to 150°C for 30 minutes, and at the increased temperature, hydroxy groups of the monomers were acetylated for 3 hours. Subsequently, while removing acetic acids generated during the acetylation reaction, the temperature of the reactor increased to 330 °C for 6 hours to prepare a wholly aromatic liquid crystalline polyester prepolymer by condensation polymerization of the monomers. In addition, when the prepolymer was prepared, acetic acids were further formed as a byproduct, and during the preparation of the prepolymer, these acetic acids were continuously removed together with the acetic acids generated during the acetylation reaction. Thereafter, the prepolymer was collected from the reactor, and then cold-solidified.

Thereafter, the wholly aromatic liquid crystalline polyester prepolymer was milled to an average particle size of 1 mm, and 20 kg of the milled wholly aromatic liquid crystalline polyester prepolymer was added to a rotary kiln reactor having a capacity of 100 L, and while nitrogen was continuously supplied thereto at a flow rate of 1 Nm³/hour, the temperature increased up to 200°C where weight loss is initiated for 1 hour, and then, increased up to 280°C for 10 hours and the temperature was maintained for 3 hours, thereby completing the preparation of the wholly aromatic liquid crystalline polyester resin (LCP). Subsequently, the reactor was cooled to room temperature for 1 hour, and the wholly aromatic liquid crystalline polyester resin (LCP) was collected from the reactor.

A melting temperature of the resin (LCP) measured by differential scanning calorimetry was 320°C.

### (2) Preparation of wholly aromatic liquid crystalline polyester resin compound

The wholly aromatic liquid crystalline polyester resin prepared in (1) as described above, carbon black (Sewon I&C, Hiblack, average particle size of 58 nm), and glass fiber (Seonjin Fiber, MF150W-NT) were mixed at ratios shown in Table 1 below, and the mixture was melt-kneaded by using a twin-screw extruder (L/D: 40, diameter: 20mm). During the melt-kneading, a barrel temperature of the extruder was 340°C. In addition, during the melt-kneading, vacuum was applied to the twin-screw extruder to remove by-products.

Subsequently, the melt-kneaded product was mixed for 10 minutes by using an automatic mixer (a product of Jeil Industry Device), and then dried in a hot-air drier (the product of Aseong PLANT) at the temperature of 130°C for 2 hours, thereby completing the preparation of the wholly aromatic liquid crystalline polyester resin compound.

### (3) Addition of stabilizer to wholly aromatic liquid crystalline polyester resin compound

Calcium stearate (Ca-ST) was added in an amount of 100 ppm based on the weight of the wholly aromatic liquid crystalline polyester resin compound to the wholly aromatic liquid crystalline polyester resin compound prepared in (2), and then, mixed by using an automatic mixer (Jeil Industry Device) for 10 minutes, and then, dried in a drying oven (Jeil Industry Device) at the temperature of 130°C for 2 hours.

**[Table 1]**

| | LCP (parts by weight) | Carbon black (parts by weight) | Glass fiber (parts by weight) |
|---|---|---|---|
| Example 1 | 100 | 20 | 50 |
| Example 2 | 100 | 5 | 50 |
| Example 3 | 100 | 30 | 50 |
| Example 4 | 100 | 4 | 50 |
| Example 5 (Ref.) | 100 | 31 | 50 |
| Example 6 | 100 | 20 | 4 |
| Example 7 | 100 | 20 | 91 |
| Example 8 | 100 | 20 | 0 |
| Comparative Example 1 | 100 | 0 | 50 |

### Evaluation Example

Properties of the wholly aromatic liquid crystalline polyester resin compounds prepared according to Examples/Reference Examples 1 to 8 and Comparative Example 1 were measured by using the following method, and results thereof are shown in Table 2.

### (Measurement of surface resistance)

The surface resistances of the wholly aromatic liquid crystalline polyester resin compounds were measured according to ASTM D257.

### (Measurement of flexural strength and flexural modulus)

The flexural strength and the flexural modulus of each of the wholly aromatic liquid crystalline polyester resin compounds were measured according to ASTM D790.

### (Measurement of heat resistance)

The heat resistance of each of the wholly aromatic liquid crystalline polyester resin compounds was measured according to ASTM D648. In this regard, the applied pressure was 18.5 kgf/cm².

### (Appearance defects of product (i.e., injection-molded product))

Samples having a size of length 50 mmx width 50 mmx thickness 3 mm were prepared from the wholly aromatic liquid crystalline polyester resin compounds prepared according to Examples/Reference Examples 1-8 and Comparative Example 1 as an injection raw material by using an injection molder (FANUC ROBOSHOT 2000i-50B) under conditions that a cylinder temperature was 380°C, a mold temperature was 120°C, an injection speed was 150 mm/s, and a cooling time was 10 seconds. Injection was performed a total of 50 times to obtain 50 samples (that is, injection-molded product), and then, when the number of samples with foreign materials among the 50 samples was less than 10, the result was evaluated as 'good appearance', and when the number of samples with foreign materials among the 50 samples was 10 or more, the result was evaluated as 'bad appearance.

**[Table 2]**

| | Surface resistance (Ω/sq) | Flexural strength (Mpa) | Flexural modulus (Gpa) | Heat resistance (°C) | Appearance |
|---|---|---|---|---|---|
| Example 1 | 6.5 x 10⁹ | 164 | 14.8 | 270 | Good |
| Example 2 | 9.8 x 10¹⁰ | 165 | 15.0 | 271 | Good |
| Example 3 | 2.4 x 10⁹ | 152 | 14.3 | 265 | Good |
| Example 4 | 1.1 x 10¹¹ | 165 | 15.1 | 271 | Good |
| Example 5 (Ref.) | 1.0 x 10⁹ | 145 | 14.2 | 261 | Good |
| Example 6 | 5.5 x 10⁸ | 96 | 10.1 | 236 | Good |
| Example 7 | 3.7 x 10¹¹ | 175 | 16.0 | 285 | Good |
| Example 8 | 3.0 x 10⁸ | 89 | 9.7 | 235 | Good |
| Comparative Example 1 | 10¹³ or more | 162 | 15.4 | 270 | Bad |

Referring to Table 2, the wholly aromatic liquid crystalline polyester resin compounds prepared according to Examples/Reference Examples 1 to 8 have a lower surface resistance than the wholly aromatic liquid crystalline polyester resin compound prepared according to

### Comparative Example 1.

In particular, since the wholly aromatic liquid crystalline polyester resin compounds prepared according to Examples/Reference Examples 1 to 5 and the wholly aromatic liquid crystalline polyester resin compound prepared according to Comparative Example 1 had the same amount of glass fiber, they showed an equivalent level of mechanical property and heat resistant temperature.

In addition, injection-molded products manufactured from the wholly aromatic liquid crystalline polyester resin compounds prepared according to Examples/Reference Examples 1 to 8 have less appearance defects than the injection-molded product manufactured from the wholly aromatic liquid crystalline polyester resin compound prepared according to Comparative Example 1.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A wholly aromatic liquid crystalline polyester resin compound comprising:
a wholly aromatic liquid crystalline polyester resin having a melting point of 300 to 450 °C; and
an electrically conductive filler,
wherein the electrically conductive filler comprises at least one selected from the group consisting of carbon black, carbon fiber, metal powder, metal-coated inorganic powder, and carbon nanotubes,
wherein an amount of the electrically conductive filler is in a range of about 5 to about 30 parts by weight based on 100 parts by weight of the wholly aromatic liquid crystalline polyester resin,
wherein the wholly aromatic liquid crystalline polyester resin compound has a surface resistance of 10⁷ to 4x10¹¹Ω/sq.

2. The wholly aromatic liquid crystalline polyester resin compound of claim 1, wherein the electrically conductive filler has a particle size of about 10 to about 100 nm.

3. The wholly aromatic liquid crystalline polyester resin compound of claim 1, further comprising an electrically non-conductive filler.

4. The wholly aromatic liquid crystalline polyester resin compound of claim 3, wherein the electrically non-conductive filler comprises at least one selected from the group consisting of glass fiber, talc, calcium carbonate, and clay.

5. The wholly aromatic liquid crystalline polyester resin compound of claim 3, wherein an amount of the electrically non-conductive filler is in a range of about 5 to about 90 parts by weight based on 100 parts by weight of the wholly aromatic liquid crystalline polyester resin.

6. An article comprising the wholly aromatic liquid crystalline polyester resin compound of any one of claims 1 to 5.

7. The article of claim 6, wherein the article is an injection-molded product of the wholly aromatic liquid crystalline polyester resin compound.

## Patentansprüche

1. Vollaromatische Flüssigkristall-Polyesterharzverbindung, umfassend:
ein vollaromatisches Flüssigkristall-Polyesterharz mit einem Schmelzpunkt von 300 bis 450 °C und
einen elektrisch leitenden Füllstoff,
wobei der elektrisch leitende Füllstoff wenigstens einen Füllstoff umfasst, der aus der Gruppe ausgewählt ist, die aus Ruß, Kohlefaser, Metallpulver, metallbeschichtetes anorganisches Pulver und Kohlenstoffnanoröhrchen besteht,
wobei die Menge an elektrisch leitendem Füllstoff in einem Bereich von etwa 5 bis etwa 30 Gewichtsteile liegt, basierend auf 100 Gewichtsteilen des vollaromatischen Flüssigkristall-Polyesterharzes,
wobei die vollaromatische Flüssigkristall-Polyesterharzverbindung einen Flächenwiderstand von 10⁷ bis 4×10¹¹ Ω/□ aufweist.

2. Vollaromatische Flüssigkristall-Polyesterharzverbindung nach Anspruch 1, wobei der elektrisch leitende Füllstoff eine Partikelgröße von etwa 10 bis etwa 100 nm aufweist.

3. Vollaromatische Flüssigkristall-Polyesterharzverbindung nach Anspruch 1, ferner umfassend einen elektrisch nichtleitenden Füllstoff.

4. Vollaromatische Flüssigkristall-Polyesterharzverbindung nach Anspruch 3, wobei der elektrisch nichtleitende Füllstoff wenigstens einen Füllstoff umfasst, der aus der Gruppe ausgewählt ist, die aus Glasfaser, Talk, Calciumcarbonat und Tonerde besteht.

5. Vollaromatische Flüssigkristall-Polyesterharzverbindung nach Anspruch 3, wobei die Menge an elektrisch nichtleitendem Füllstoff im Bereich von etwa 5 bis etwa 90 Gewichtsteilen liegt, basierend auf 100 Gewichtsteilen des vollaromatischen Flüssigkristall-Polyesterharzes.

6. Artikel, umfassend die vollaromatische Flüssigkristall-Polyesterharzverbindung nach einem der Ansprüche 1 bis 5.

7. Artikel nach Anspruch 6, wobei der Artikel ein Spritzgussprodukt der vollaromatischen Flüssigkristall-Polyesterharzverbindung ist.

## Revendications

1. Composé de résine de polyester cristallin liquide entièrement aromatique comprenant :
une résine de polyester cristallin liquide entièrement aromatique ayant un point de fusion compris entre 300 et 450 °C ; et
un additif électriquement conducteur,
dans lequel l'additif électriquement conducteur comprend au moins un élément sélectionné dans le groupe constitué du noir de carbone, d'une fibre de carbone, d'une poudre métallique, d'une poudre inorganique revêtue d'un métal, et des nanotubes de carbone,
dans lequel une quantité de l'additif électriquement conducteur est comprise dans une plage allant d'environ 5% à environ 30% en poids de la résine de polyester cristallin liquide entièrement aromatique,
dans lequel le composé de résine de polyester cristallin liquide entièrement aromatique présente une résistivité surfacique compris entre 10⁷ et 4 x 10¹¹ Ω/carré.

2. Composé de résine de polyester cristallin liquide entièrement aromatique selon la revendication 1, dans lequel l'additif électriquement conducteur présente une taille particulaire d'environ 10 à environ 100 nm.

3. Composé de résine de polyester cristallin liquide entièrement aromatique selon la revendication 1, comprenant en outre un additif électriquement non conducteur.

4. Composé de résine de polyester cristallin liquide entièrement aromatique selon la revendication 3, dans lequel l'additif électriquement non conducteur comprend au moins un élément sélectionné dans le groupe constitué d'une fibre de verre, d'un talc, d'un carbonate de calcium, et d'une argile.

5. Composé de résine de polyester cristallin liquide entièrement aromatique selon la revendication 3, dans lequel une quantité de l'additif électriquement non conducteur est comprise dans une plage allant d'environ 5% à environ 90% en poids de la résine de polyester cristallin liquide entièrement aromatique.

6. Article incluant le composé de résine de polyester cristallin liquide entièrement aromatique selon l'une des revendications 1 à 5.

7. Article selon la revendication 6, dans lequel l'article est un produit moulé par injection du composé de résine de polyester cristallin liquide entièrement aromatique.
